# FASCICULE DE BREVET EUROPEEN

(11) **EP 2 368 105 B1**
(45) Date de publication et mention de la délivrance du brevet: **28.06.2017**
(21) Numéro de dépôt: 09803796.3
(22) Date de dépôt: 21.12.2009
(51) Int. Cl.: G01N 21/95, G05B 19/418, G06T 7/00, G05B 19/00, G05B 19/401, G01N 21/91, G01N 21/88

(54) **PROCEDE DE CONTROLE NON DESTRUCTIF D'UNE PIECE MECANIQUE**
VERFAHREN ZUR NICHTDESTRUKTIVEN INSPEKTION EINES MECHANISCHEN TEILS
METHOD FOR THE NON-DESTRUCTIVE INSPECTION OF A MECHANICAL PART

(30) Priorité: 24.12.2008 FR 0807460; 03.07.2009 FR 0903289
(43) Date de publication de la demande: 28.09.2011
(73) Titulaire: Snecma, 75015 Paris (FR)
(72) Inventeur: DERRIEN, Gérard, F-78800 Houilles (FR); LEONETTI, Claude, F-91080 Courcouronnes (FR)
(74) Mandataire: Ramey, Daniel
(86) Numéro de dépôt international: PCT/FR2009/001468
(87) Numéro de publication internationale: WO 2010/072920

(56) Documents cités:
- WO-A2-00/63681
- US-A- 5 963 328
- US-A1- 2002 176 010
- US-A1- 2006 119 864
- US-A1- 2007 122 026
- US-A1- 2007 196 012
- GRABOWSKI H ET AL: "QUALITAETSPRUEFUNG VON WERKSTUECKEN MIT BILDVERARBEITENDEN SYSTEMEN. \NEUER ANSATZ MIT PRODUKTMODELLDATEN ALS BASIS" VDI Z, SPRINGER VDI VERLAG, DUSSELDORF, DE, vol. 134, no. 10, 1 octobre 1992 (1992-10-01), pages 128-132,135, XP000324019 ISSN: 0042-1766

## Description

La présente invention concerne un procédé de contrôle non destructif d'une pièce mécanique, telle par exemple qu'un composant de turbomachine.

Un contrôle d'usure de certaines pièces de turbomachine peut être effectué par une technique de ressuage, permettant une bonne détection des défauts de compacité débouchant en surface et non obstrués, tels que des fissures, porosités, ou replis.

Cette technique requiert l'utilisation de produits colorés ou fluorescents à faible tension superficielle, couramment appelés « pénétrants », capables de pénétrer par capillarité dans les défauts débouchants des pièces. Après application de ces produits pénétrants sur les pièces, imprégnation, puis élimination de l'excès de pénétrants restant en surface, les défauts apparaissent par application sur les pièces d'une fine couche de poudre formée de tubes capillaires aptes à pomper les produits pénétrants présents dans les discontinuités de la pièce.

La technique de ressuage se révèle toutefois contraignante à l'usage, du fait notamment qu'elle requiert l'intervention d'un opérateur dûment qualifié pour en interpréter les résultats.

De plus, elle peut être relativement dangereuse et polluante du fait de l'utilisation de produits inflammables, volatils et nocifs.

On connaît par ailleurs des procédés de contrôle optique d'une pièce mécanique (par exemple par le document US 2007/0122026A1), qui consistent à définir automatiquement une trajectoire d'un capteur d'images et d'un moyen d'éclairage au-dessus de la surface de la pièce, à partir d'un relevé de la surface de la pièce ou de données numériques définissant la surface de la pièce, le déplacement du capteur d'images sur cette trajectoire permettant d'acquérir des images de toute la surface de la pièce. Ces images doivent ensuite être examinées et analysées pour la détection de défauts à la surface de la pièce, cet examen et cette analyse posant des problèmes qui n'ont pas été résolus de façon satisfaisante à ce jour.

L'invention a notamment pour but d'apporter une solution économique et efficace à ces problèmes, permettant le traitement et l'optimisation automatique des images acquises.

Elle a en particulier pour but de permettre un contrôle de pièces mécaniques qui soit simple et rapide à mettre en oeuvre, et qui puisse être exécuté de manière automatique par voie optique sans contact.

L'invention propose à cet effet un procédé automatisé de contrôle non destructif d'une pièce mécanique au moyen d'un dispositif comprenant un capteur d'images, une source lumineuse d'éclairage et des moyens de déplacement relatif du capteur d'images, de la source lumineuse et de la pièce mécanique, ce procédé consistant essentiellement à effectuer un relevé tridimensionnel de la surface de la pièce, définir un découpage de la surface de la pièce en zones propres à être photographiées par le capteur d'images, définir une trajectoire du capteur d'images et de la source lumineuse relativement à la pièce et acquérir des images desdites zones de la surface de la pièce, caractérisé en ce qu'il consiste également :
- à analyser ces images et à déterminer dans ces images des zones surexposées ou sous-exposées ;
- à optimiser des paramètres optiques d'acquisition d'images de ces zones et à définir un second découpage de la surface de la pièce en prenant en compte l'optimisation desdits paramètres optiques pour ces zones ;
- à définir une nouvelle trajectoire du capteur d'images et de la source lumineuse permettant d'acquérir des images de la surface de la pièce en utilisant le second découpage et les paramètres optiques optimisés ;
- à acquérir des images de ces zones en suivant la nouvelle trajectoire et à enregistrer ces images, et
- à déterminer automatiquement d'éventuels défauts de la surface de la pièce dans les images enregistrées et à les comparer à des défauts connus enregistrés dans une base de données.

Le procédé de contrôle non destructif proposé par l'invention présente une bonne sensibilité aux défauts de surface des pièces, et permet une réduction considérable du temps imparti à la préparation des pièces à contrôler.

Ce procédé se révèle également plus économique du fait qu'il ne requiert aucun produit consommable, et que sa mise en oeuvre nécessite relativement peu de qualification.

Le procédé selon l'invention permet en outre d'éviter les dangers liés à l'utilisation de produits inflammables, volatils et nocifs, et les inconvénients inhérents à la gestion des déchets liquides qui en résultent.

Chaque pièce peut être préalablement soumise, avant toute utilisation, à un relevé tridimensionnel de la topologie de sa surface, de manière à garantir la précision des contrôles non destructifs ultérieurs en permettant une localisation précise du capteur d'images et de la source d'éclairage face à la surface de la pièce, quels que soient les écarts de position ou de forme constatés sur celle-ci. De cette manière, il est possible avec le procédé selon l'invention, d'analyser tout type de pièce allant d'une pièce neuve (avant utilisation) à une pièce usagée ou qui a été utlisée. Ce relevé tridimensionnel permet aussi d'effectuer un suivi de l'évolution de l'état de la pièce au cours du temps. Ceci est avantageux dans le cas où des écarts de forme significatifs sont susceptibles d'exister entre des pièces de même type.

Le relevé tridimensionnel de la surface et la définition du programme d'acquisition d'images peuvent être effectués une seule fois pour un type donné de pièces mécaniques, ce qui permet un gain de temps sans induire de réduction notable de la précision des contrôles, lorsque les écarts de forme et d'aspect susceptibles d'exister entre différentes pièces de même type, produites en série, sont négligeables, c'est-à-dire que les défauts de forme sont inférieurs à la précision de localisation du capteur optique et de la source d'éclairage et que les écarts d'aspect se situent dans une plage de réglage définie en base de données.

Selon une autre caractéristique de l'invention, le procédé consiste également à constituer au préalable une base de données dans laquelle sont enregistrées des images de référence de surfaces de pièce mécanique présentant des défauts typiques, chaque image étant enregistrée conjointement avec des données de caractéristiques de surface, telles que la nature du matériau et sa rugosité, avec des informations relatives aux conditions d'éclairage et de prise de vue, et avec un indicateur de la qualité de détection d'un défaut à la surface de la pièce, le procédé consistant ensuite à enregistrer dans cette base de données les modifications des paramètres optiques et des trajectoires d'acquisition et les résultats des contrôles effectués sur les différentes pièces.

Cette base de données est initialement constituée avec le plus grand nombre possible d'informations que l'on peut recueillir sur une pièce à contrôler et sur des pièces ou cales étalons présentant des défauts typiques connus, dont on relève les caractéristiques avec des méthodes connues de contrôle non destructif, après quoi on complète et on « nourrit » cette base de données avec les résultats des contrôles effectués sur les différentes pièces qui sont examinées successivement. Lorsque la base de données a été bien « nourrie », on peut simplifier l'exécution du procédé selon l'invention, par exemple au niveau de l'optimisation des images, comme cela va être rappelé ci-dessous.

Selon une autre caractéristique de l'invention, le procédé consiste également, après le relevé tridimensionnel de la surface de la pièce, à générer un modèle numérique de cette surface sous forme de courbes mathématiques telles que des courbes de Bézier et des fonctions NURBS, et à recaler le capteur d'images et la source lumineuse par rapport à la pièce en utilisant le relevé tridimensionnel.

Selon encore une autre caractéristique de l'invention, l'optimisation des paramètres optiques d'acquisition d'images consiste à faire varier l'intensité et l'angle d'incidence de l'éclairage produit par la source lumineuse, et à déterminer une valeur optimale de l'intensité et de l'angle d'incidence de l'éclairage par comparaison entre elles d'images en référence à la base de données en établissant une relation entre le niveau de détection des défauts de surface et, d'une part, l'intensité et l'angle d'incidence de l'éclairage et, d'autre part, des caractéristiques de surface.

Cette optimisation consiste également à vérifier que la surface de chaque zone résultant du découpage secondaire est inférieure au champ couvert par le capteur d'images et que l'écart type des normales en tout point de ces zones est inférieur à une valeur minimale prédéterminée.

L'optimisation concerne des zones déterminées dans des images d'un découpage primaire et représentatives des conditions réelles de sur-exposition, de sous-exposition ou de bonne exposition à l'éclairage lors de l'acquisition optique au réel dans les conditions de mesure.

Ceci permet de définir des valeurs optimales de l'intensité et de l'angle d'éclairage par comparaison entre elles des images de chaque zone caractéristique en référence à la base de données précitée établissant une relation entre le niveau de détection des défauts de surface et d'une part, l'intensité et l'angle d'incidence de l'éclairage fourni par la source lumineuse, et d'autre part, des caractéristiques de la surface, puis de déterminer les paramètres optimaux d'éclairage et de position du capteur pour chaque image d'un découpage secondaire,

On détermine finalement une trajectoire de la source lumineuse et du capteur permettant d'acquérir les images du découpage secondaire en utilisant les paramètres optimisés.

L'optimisation des images par discrétisation (ou re-découpage) des zones concernées et par réglage des paramètres optiques d'acquisition d'images et/ou par vérification de l'écart type des normales en tout point de ces zones, peut être répétée autant que nécessaire jusqu'à obtention d'un résultat de qualité suffisante.

La répétition de l'optimisation et l'enregistrement des résultats dans la base de données permettent de « nourrir » cette dernière, pour n'utiliser ensuite, si nécessaire, sur les pièces suivantes à contrôler, qu'une seule des méthodes précitées d'optimisation par réglage des paramètres optiques d'acquisition ou par vérification de l'écart type des normales.

Dans un mode de réalisation de l'invention, le procédé consiste à déplacer le capteur d'images et la source lumineuse par rapport à la pièce mécanique au moyen d'un bras robotisé dont une extrémité porte le capteur d'images et un dispositif orientable de support de la source lumineuse.

Le bras robotisé permet de déplacer le capteur d'images et la source lumineuse autour de la pièce mécanique pour permettre des acquisitions successives d'images de la totalité de la surface de la pièce dans des conditions optimales d'éclairage de cette surface et de réglage focal.

Le capteur d'image peut être porté par un premier bras robotisé permettant d'orienter le capteur d'image sensiblement suivant la normale à la surface considérée et la source lumineuse étant portée par un deuxième bras robotisé, synchronisé avec le premier bras, ce qui permet de modifier l'orientation angulaire de la source lumineuse par rapport à la pièce indépendamment du mouvement du capteur.

Dans certaines configurations d'acquisitions d'images, l'orientation de la source lumineuse est telle que l'incidence des rayons lumineux est rasante par rapport à la surface considérée de la pièce.

Le découpage de la surface de la pièce est avantageusement défini de sorte que l'image de chaque zone présente un taux prédéterminé de recouvrement avec les images des zones voisines.

Cela permet de garantir qu'aucune partie de la surface de la pièce n'échappe au contrôle.

Selon une autre caractéristique de l'invention, le capteur d'images est un appareil photo à matrice de photodétecteurs du type CCD ou CMOS.

Un tel appareil permet l'acquisition d'images présentant une bonne résolution et sous un format numérique, tout en étant relativement bon marché.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique de moyens de mise en oeuvre du procédé selon l'invention ;
- la figure 2 illustre les principales étapes du procédé selon l'invention ;
- la figure 3 est un organigramme du procédé selon l'invention.

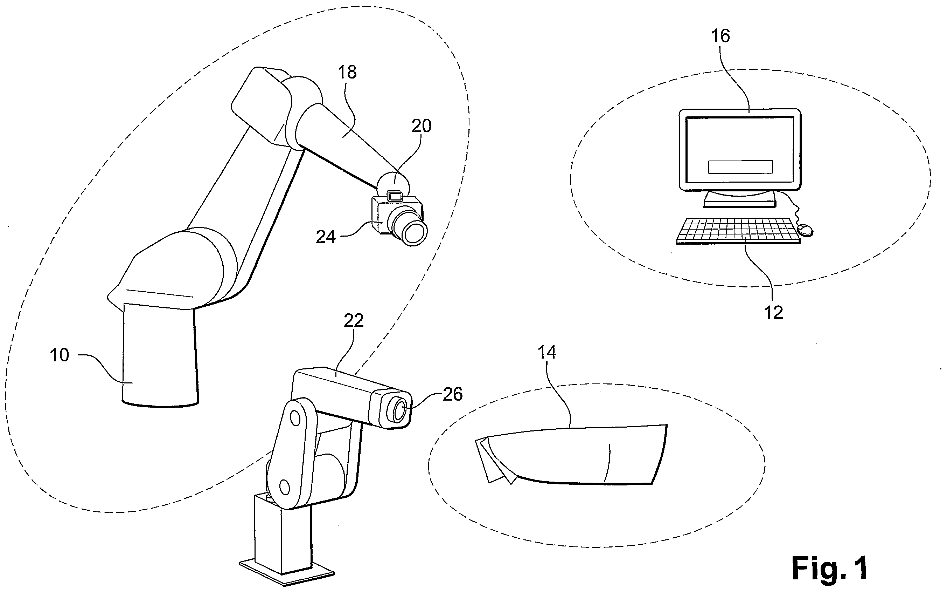

La figure 1 représente schématiquement des moyens 10, 12 de mise en oeuvre du procédé de contrôle non destructif de pièces mécaniques proposé dans le cadre de l'invention, et une pièce 14 à contrôler, telle par exemple qu'une aube 14 de soufflante de turbomachine.

Les moyens de mise en oeuvre du procédé de contrôle non destructif comprennent un dispositif 10 d'acquisition d'images numériques couplé à un dispositif d'éclairage et des moyens 12 de traitement d'image, comprenant par exemple un micro-ordinateur 16 de type PC ou analogue, qui est de préférence capable de piloter le dispositif 10 d'acquisition d'images et d'éclairage.

Le dispositif 10 d'acquisition d'images numériques comprend au moins un bras robotisé 18 dont une extrémité 20 comporte des moyens articulés de support d'un capteur d'images 24. Le dispositif d'éclairage comprend des moyens articulés 22 de support d'une source lumineuse 26.

Le capteur d'images 24 est par exemple un appareil photographique à matrice de photodétecteurs du type CCD ou CMOS, couramment appelé « appareil photo numérique ».

Les moyens 12 de traitement d'image sont reliés à ou comprennent une base de données dans laquelle sont enregistrées des images de référence de surfaces de pièces mécaniques de différents types présentant des défauts typiques (criques, fissures, rayures, impacts,...), chaque image étant enregistrée conjointement avec des données concernant certaines caractéristiques de surface, telles que la nature du matériau et la rugosité, avec des informations relatives aux conditions d'éclairage et de prise de vue, et avec un indicateur de la qualité de la détection d'un défaut présent sur la surface de la pièce. Une image de référence d'un défaut réel ou d'un artéfact optique est en particulier constituée d'un fond gris sensiblement uniforme et d'une partie ayant un niveau de gris supérieur ou inférieur au fond uniforme. Le fond gris sensiblement uniforme est défini comme une valeur de niveau de gris déterminée à une valeur de tolérance près.

La base de données d'images de référence est réalisée préalablement à la mise en oeuvre du procédé. Des moyens optiques sont utilisés pour acquérir des images sur des pièces comprenant des défauts connus. Ces images sont validées par comparaison avec une ou plusieurs méthodes de référence couramment utilisées en contrôle non destructif tels que par exemple la photothermie ou les courants de Foucault. Ces méthodes sont mises en oeuvre au moyen d'instruments déplaçables par le bras robotisé. Les pièces utilisées pour la réalisation de la base de données peuvent être différentes des pièces à contrôler.

La base de données d'images de référence comprend pour chaque image des informations relatives :
- au niveau de gris du fond de l'image
- au matériau sur lequel l'image a été prise ;
- au procédé de fabrication de la pièce, tel que par exemple fraisage, fonderie,... ;
- à l'état de surface de la pièce (rugosité, ...) ;
- aux conditions de mesure utilisées pour réaliser l'image et comportant notamment des données sur l'éclairage, la focale, l'ouverture de l'objectif et le temps d'exposition ;
- au type et à la forme du défaut dans le cas où l'image indique la présence d'un défaut ;
- à la présence d'un artéfact optique ;
- au champ de contraintes présent dans la partie de la pièce photographiée ;
- au nombre n de fois où une image d'une zone donnée a été acquise par le procédé selon l'invention.

La base de données précitée peut être hébergée par un serveur informatique dédié relié au micro-ordinateur 16 par un réseau informatique, ou être directement hébergée par le micro-ordinateur 16.

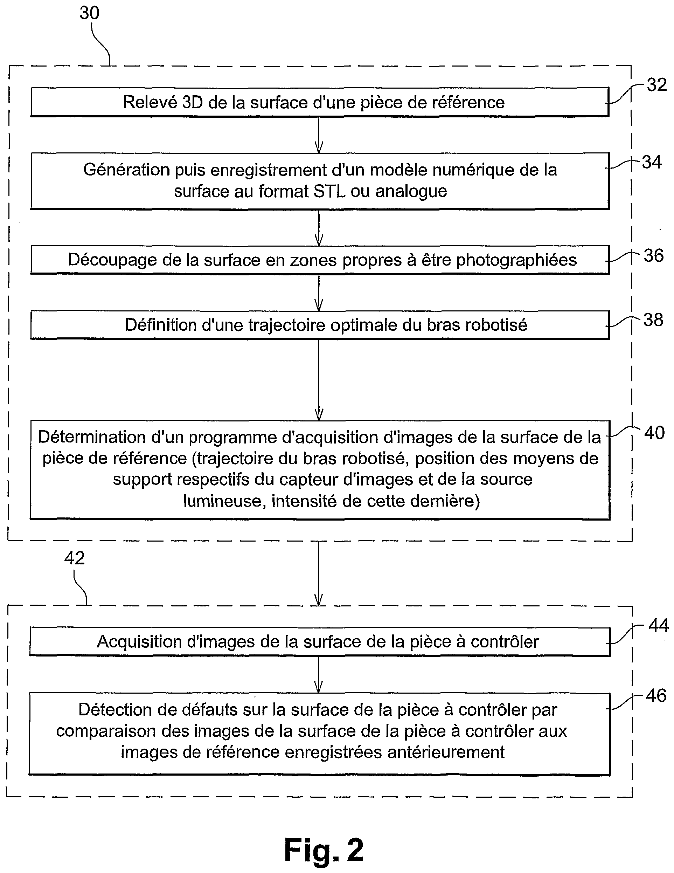

La figure 2 illustre les grandes phases successives du procédé de contrôle non destructif selon l'invention.

Ce procédé comporte une première phase 30 de définition d'un programme d'acquisition d'images de la surface d'une pièce.

Dans une première étape 32, un relevé tridimensionnel de la surface de la pièce à contrôler est effectué avec des moyens conventionnels de mesure 3D par exemple du type sans contact, puis un modèle numérique de cette surface est généré au format STL en 34 à partir du relevé tridimensionnel. Une modélisation simplifiée du relevé tridimensionnel est réalisée sous forme de surfaces mathématiques 3D comprenant des courbes de Bézier et des fonctions NURBS (« Non-Uniform Rational Basis Splines »), dans un format numérique neutre de type IGES compatible avec les systèmes standard de conception et fabrication assistées par ordinateur.

Une étape de recalage du capteur optique et de la source lumineuse est réalisée pour les positionner correctement par rapport à la pièce en utilisant le relevé tridimensionnel.

Cette étape de recalage consiste essentiellement à utiliser un modèle numérique théorique connu de positionnement de la source lumineuse et du capteur optique pour une pièce d'un type donné et à corriger ces positions théoriques de la source lumineuse et du capteur optique en utilisant des informations géométriques issues du relevé tridimensionnel. En effet, pour un type de pièce donnée, par exemple une aube, on établit un modèle numérique théorique de positionnement du capteur optique et de la source lumineuse permettant théoriquement d'acquérir des images de toute la pièce. Cependant, les écarts de forme entre la pièce réelle et la pièce théorique ainsi que les écarts dus au positionnement réel du dispositif 10 d'acquisition d'images et d'éclairage nécessitent un recalage qui habituellement est réalisé manuellement par un opérateur lequel corrige chaque position du capteur optique et de la source lumineuse pour chaque position d'acquisition afin de garantir une acquisition optique correcte. L'intégration au procédé d'une étape préalable de mesure tridimensionnelle de la pièce permet de réaliser automatiquement cette étape de recalage.

En pratique, la mesure tridimensionnelle préalable permet de calculer les normales réelles en chaque position d'acquisition, lesquelles sont utilisées pour ajuster les positionnements réels du capteur optique et de la source lumineuse par rapport à la pièce.

Cette étape permet ainsi de réaliser un recalage ou repositionnement précis et automatique du dispositif d'acquisition par rapport à la pièce réelle.

L'étape suivante 36 du procédé consiste tout d'abord à définir les zones propres à être photographiées. Pour cela la surface de la pièce à contrôler est découpée en zones primaires propres à être photographiées par le capteur d'images 24. Une acquisition d'images est réalisée en positionnant le capteur et la source lumineuse en utilisant les paramètres contenus dans la base de données d'images de référence, c'est-à-dire des paramètres relatifs à la matière de la surface photographiée, à sa rugosité et à sa forme.

Le programme de découpage de la surface de la pièce en zones primaires est défini soit sur la pièce étudiée, soit sur une pièce de référence. Dans cette étape préalable, l'opérateur définit les paramètres de prises de vue afin que les images prises aient un niveau de gris le plus homogène possible. Les paramètres (position du capteur, paramètres de prise de vue...) peuvent être organisés dans une base de données spécifiquement associée à la pièce étudiée. Ainsi, l'opérateur peut en appelant la référence d'une pièce charger les paramètres nécessaires à l'exécution de cette première étape de découpage.

Cette première étape de découpage de la pièce permet de vérifier l'homogénéité de l'apparence de la pièce étudiée par rapport aux réglages de référence de la base de données. Par exemple, certaines pièces nécessitent des usinages additionnels en fin de cycle de production pour éliminer une bavure d'usinage ou pour un équilibrage dynamique. La fréquence de ces usinages additionnels ainsi que leurs positions sur la pièce sont aléatoires. L'aspect global d'un type de pièce est donc variable d'une pièce à l'autre, certaines pièces présentant aléatoirement des zones plus brillantes que d'autres. L'utilisation d'un programme préétabli permet de détecter ces zones et de les traiter spécifiquement.

A l'issue de cette première étape d'analyse des images du découpage primaire, on détecte les zones de ces images ayant un aspect hétérogène c'est-à-dire qui présentent une sur-exposition ou une sous-exposition par rapport au réglage provenant de la base de données. Pour cela chaque zone hétérogène est segmentée en plusieurs parties et on acquiert plusieurs images numériques de ces parties en faisant varier l'incidence et l'intensité de l'éclairage, les réglages et l'orientation de la focale ainsi que le temps d'exposition du capteur, ces paramètres d'acquisition étant déterminés en prenant en compte le matériau de la pièce, le procédé de fabrication de celle-ci ainsi que son état de surface.

Après optimisation des réglages d'acquisition 2D sur l'ensemble des zones sur ou sous exposées, on réalise un nouveau découpage prenant en compte l'optimisation pour l'ensemble des zones.

Ce nouveau processus de découpage consiste essentiellement à délimiter des zones de la pièce, en vérifiant d'une part que les dimensions de chaque zone sont inférieures ou égales au champ linéaire couvert par le capteur d'images, et d'autre part que l'écart type angulaire de l'ensemble des normales d'une zone considérée est inférieur à une valeur prédéterminée dépendant du niveau souhaité de détection des défauts de la surface de la pièce et de la profondeur de champ du capteur d'images.

Cette valeur prédéterminée est obtenue par couplage de plusieurs paramètres. A cette fin, la courbure 3D peut être mesurée dans chaque zone et combinée à la profondeur de champ du capteur optique, ce qui permet de renseigner sur le niveau de détection qui sera obtenu. Pour assurer une détection des défauts, une valeur angulaire maximale d'écart entre la normale au plan focal et la normale à un point d'un défaut est définie en utilisant la base de données d'images de référence. Ainsi, il est nécessaire que l'écart type angulaire de l'ensemble des normales dans chaque zone soit inférieur à la valeur angulaire maximale de détection du plan focal considéré.

La valeur angulaire maximale d'écart est définie expérimentalement à l'aide de pièces étalons. Pour cela, une pièce étalon est placée en regard du capteur et on détermine l'écart angulaire à partir duquel il n'est plus possible d'obtenir une image satisfaisante.

Le processus de découpage est de préférence conçu de sorte que l'image de chaque zone présente un certain taux de recouvrement avec les images des zones voisines, de manière à garantir une couverture de l'ensemble de la surface de la pièce par le capteur d'image au cours du programme d'acquisition d'images.

L'étape suivante 38 consiste à définir une trajectoire optimale du bras robotisé 18 permettant d'amener successivement le capteur d'images 24 sur la normale moyenne de chaque zone secondaire prédéterminée de la surface de la pièce, à la distance D de cette surface, en minimisant le nombre de mouvements du bras robotisé.

Par extrapolation des résultats d'optimisation de réglages à l'ensemble des zones secondaires, on peut déterminer en 40 un programme complet d'acquisition d'images de la surface de la pièce, comprenant une trajectoire du bras robotisé, des moyens 22 de support du capteur d'images, et des moyens 26 de support de la source lumineuse, permettant d'amener successivement le capteur d'image 24 et la source lumineuse 28 dans leurs positions optimales respectives pour l'acquisition d'une image de chaque zone de la surface de la pièce, ainsi que l'évolution optimale de l'intensité d'émission de la source lumineuse au cours de cette trajectoire.

Le contrôle non destructif est réalisé lors d'une deuxième phase 42, la surface de la pièce à contrôler étant découpée en zones secondaires d'acquisition optique optimisées selon la phase décrite en 30. On enregistre en 44 une image de chaque zone de la surface de la pièce-à contrôler en suivant le programme d'acquisition d'images obtenu grâce au relevé tridimensionnel de la topologie de la surface de la pièce.

Des algorithmes de traitement d'images sont appliqués en 46 aux images de chacune des zones. Ces algorithmes consistent essentiellement à extraire d'une image d'une zone les parties correspondant à des hétérogénéités en niveau de gris par rapport au reste de l'image. Ces parties sont ensuite comparées avec les images dans la base de données de référence ayant une même forme géométrique et les mêmes caractéristiques de surface, c'est-à-dire une rugosité de surface identique, un matériau identique à celui sur lequel l'image a été obtenue, et un procédé identique d'obtention de la surface. Pour chaque image étudiée, on compare par exemple la distribution spatiale des niveaux de gris des parties hétérogènes relevés sur la zone étudiée avec les défauts présents sur les images dans la base de données d'images de référence.

La comparaison aboutit à deux résultats :
- soit aucune correspondance n'est établie avec une image de la base de données d'images de référence,
- soit une correspondance est établie.

Dans le premier, cas, où aucune correspondance n'est établie avec la base de données d'images de référence pour une image d'une zone donnée de la pièce, cette zone est analysée au moyen d'un instrument de contrôle non destructif conventionnel porté par le bras robotisé, afin de déterminer s'il s'agit ou non d'un défaut. Cette information est ensuite enregistrée dans la base de données d'images de référence avec l'image et en relation notamment avec les conditions d'acquisition de l'image, l'état de surface et le type de matériau de la pièce.

Dans le second cas, où une correspondance à été établie avec une image de la base de données d'images de référence, un critère de fiabilité est appliquée à cette correspondance et consiste à chercher dans la base de données d'images de référence le nombre n de fois où une telle image a déjà été photographiée. Si n est supérieur à une valeur seuil N déterminée, la détection est considérée comme fiable et on attribue à cette image l'information relative à la présence ou non d'un défaut. Dans le cas où n est inférieur à la valeur seuil N, une méthode de contrôle non destructif par un instrument conventionnel est mise en oeuvre de manière à confirmer l'information sur la présence ou non d'un défaut. Le nombre de fois où une correspondance a été établie avec une image de la base de données d'images de référence est ensuite incrémenté à n+1.

La mise en oeuvre du procédé selon l'invention, peut ainsi se faire sans intervention humaine dans le cas où il existe une correspondance fiable avec la base de données d'images de référence. Dans le cas où l'utilisation de moyens de contrôle non destructifs conventionnels est nécessaire, l'image obtenue est intégrée à la base de données d'images de référence pour la compléter et améliorer les détections futures.

Le procédé de contrôle non destructif décrit ci-dessus permet de détecter des défauts avec une sensibilité comparable aux techniques de ressuage tout en présentant de nombreux avantages par rapport à ces techniques, comme cela a été mentionné dans ce qui précède.

Ce procédé présente en particulier l'avantage d'être entièrement automatisable. Ce procédé est également auto-adaptatif. En effet, quel que soit le positionnement initial de la pièce par rapport à la source d'éclairage et par rapport au capteur et quelle que soit la forme de la pièce, il est possible grâce à l'acquisition tridimensionnelle initiale d'effectuer une opération de contrôle non destructif.

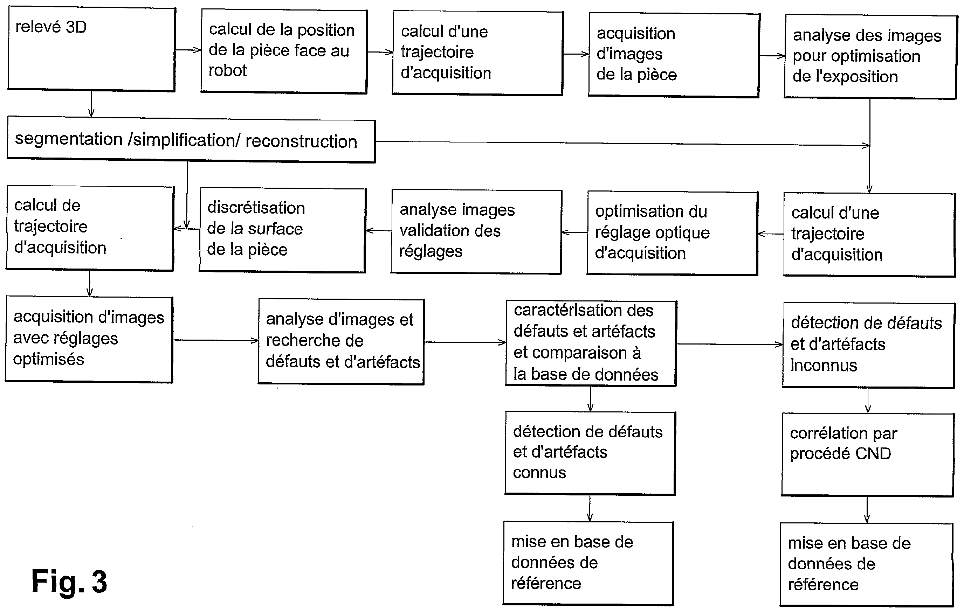

La figure 3 est une représentation schématique d'un organigramme du procédé selon l'invention, qui comprend essentiellement :
- un relevé tridimensionnel de la surface de la pièce, à partir duquel on calcule la position réelle de la pièce en face du dispositif d'éclairage et de prise de vues,
- le calcul d'une trajectoire de ce dispositif pour l'acquisition optique bidimensionnelle de la surface de la pièce,
- l'acquisition d'images globales de la pièce en utilisant les paramètres de la base de données relatifs à la matière, la rugosité et la forme de la surface,
- une analyse des images et la détermination dans ces images de zones permettant une optimisation des réglages optiques liés à l'exposition en fonction des paramètres figurant dans la base de données sur l'orientation du capteur de prise de vues, l'éclairage et la forme de la surface,
- le calcul d'une trajectoire d'acquisition d'images permettant d'optimiser les réglages optiques en tenant compte de l'analyse ci-dessus et d'une trajectoire du dispositif d'éclairage,
- l'optimisation des réglages optiques d'acquisition d'images des zones définies précédemment,
- l'analyse des images, la validation des réglages optimisés pour les différentes zones et leur enregistrement dans la base de données,
- la discrétisation de la surface de la pièce en zones d'acquisition tenant compte des réglages optimisés, pour obtenir la meilleure qualité d'image dans chaque zone discrétisée (la discrétisation permettant de diviser une zone présentant un défaut d'image, par exemple une surexposition locale, en zones plus petites, et plus homogènes dont on règle l'éclairage et les paramètres de prise d'image à des valeurs optimales),
- puis, en combinaison avec le résultat d'une étape de segmentation, simplification et reconstruction, le calcul d'une trajectoire d'acquisition d'images au réel,
- la prise d'images de la surface de la pièce avec les réglages optimisés,
- l'analyse des images et la recherche de défauts et d'artéfacts optiques,
- la caractérisation des défauts et artéfacts trouvés et leur comparaison à des défauts et artéfacts connus enregistrés dans une base de données, à partir de leurs poids en pixels, de la courbure 3D de la pièce, et de la distribution de chaque défaut dans un sens longitudinal et dans un sens transversal,
- puis, si les défauts et artéfacts trouvés sont déjà connus, leur enregistrement en base de données de référence et l'édition d'un rapport correspondant,
- ou, si les défauts et artéfacts trouvés ne figurent pas dans la base de données, leur corrélation par des procédés de contrôle non destructif (par exemple courants de Foucault ou photothermie), leur identification comme nouveau défaut ou nouvel artéfact optique et leur enregistrement en base de données de référence.

## Revendications

1. Procédé automatisé de contrôle non destructif d'une pièce mécanique (14) au moyen d'un dispositif (10) comprenant un capteur d'images (24), une source lumineuse d'éclairage (26) et des moyens (18, 22) de déplacement relatif du capteur d'images, de la source lumineuse et de la pièce mécanique, ce procédé consistant essentiellement à effectuer un relevé tridimensionnel de la surface de la pièce, définir un découpage de la surface de la pièce en zones propres à être photographiées par le capteur d'images, définir une trajectoire du capteur d'images et de la source lumineuse relativement à la pièce et acquérir des images desdites zones de la surface de la pièce, **caractérisé en ce qu'**il consiste également :
- à analyser ces images et à déterminer dans ces images des zones surexposées ou sous-exposées ;
- à optimiser des paramètres optiques d'acquisition d'images de ces zones et à définir un second découpage de la surface de la pièce en prenant en compte l'optimisation desdits paramètres optiques pour ces zones ;
- à définir une nouvelle trajectoire du capteur d'images et de la source lumineuse permettant d'acquérir des images de la surface de la pièce en utilisant le second découpage et les paramètres optiques optimisés ;
- à acquérir des images de ces zones en suivant la nouvelle trajectoire et à enregistrer ces images, et
- à déterminer automatiquement d'éventuels défauts de la surface de la pièce dans les images enregistrées et à les comparer à des défauts connus enregistrés dans une base de données.

2. Procédé selon la revendication 1, **caractérisé en ce qu'**il consiste à constituer au préalable une base de données dans laquelle sont enregistrées des images de référence de surfaces de pièce mécanique présentant des défauts typiques, chaque image étant enregistrée conjointement avec des données de caractéristiques de surface, telles que la nature du matériau et sa rugosité, avec des informations relatives aux conditions d'éclairage et de prise de vue, et avec un indicateur de la qualité de détection d'un défaut à la surface de la pièce, le procédé consistant ensuite à enregistrer dans cette base de données les modifications des paramètres optiques et des trajectoires d'acquisition et les résultats des contrôles effectués sur les différentes pièces.

3. Procédé selon la revendication 1 ou 2, **caractérisé en ce que** le relevé tridimensionnel de la surface de la pièce (14) est effectué une seule fois pour un type donné de pièce mécanique, lorsque les différences de forme et d'aspect entre les pièces contrôlées sont faibles ou sensiblement nulles.

4. Procédé selon la revendication 1 ou 2, **caractérisé en ce que** la pièce (14) à contrôler est soumise à un relevé tridimensionnel de sa surface lorsqu'elle présente des écarts de forme et d'aspect non négligeables par rapport à d'autres pièces contrôlées.

5. Procédé selon l'une des revendications 1 à 4, **caractérisé en ce qu'**il consiste également, après le relevé tridimensionnel de la surface de la pièce (14), à générer un modèle numérique de cette surface sous forme de courbes mathématiques telles que des courbes de Bézier et des fonctions NURBS, et à recaler le capteur d'images (24) et la source lumineuse (26) par rapport à la pièce en utilisant le relevé tridimensionnel.

6. Procédé selon l'une des revendications précédentes, **caractérisé en ce que** l'optimisation des paramètres optiques d'acquisition d'images consiste à faire varier l'intensité et l'angle d'incidence de l'éclairage produit par la source lumineuse (26), et à déterminer une valeur optimale de l'intensité et de l'angle d'incidence de l'éclairage par comparaison entre elles d'images en référence à la base de données en établissant une relation entre le niveau de détection des défauts de surface et, d'une part, l'intensité et l'angle d'incidence de l'éclairage et, d'autre part, des caractéristiques de surface.

7. Procédé selon l'une des revendications précédentes, **caractérisé en ce que** l'optimisation consiste également à vérifier que la surface de chaque zone résultant du découpage secondaire est inférieure au champ couvert par le capteur d'images et que l'écart type des normales en tout point de ces zones est inférieur à une valeur minimale prédéterminée.

8. Procédé selon l'une des revendications précédentes, **caractérisé en ce qu'**il consiste à déplacer le capteur d'images (24) et la source lumineuse (26) par rapport à la pièce mécanique (14) au moyen de bras robotisés (18, 22) portant respectivement le capteur d'images et la source lumineuse.

9. Procédé selon l'une des revendications précédentes, **caractérisé en ce que** le capteur d'images (24) est un appareil photographique à matrice de photodétecteurs du type CCD ou CMOS.

10. Procédé selon la revendication 1, **caractérisé en ce qu'**il consiste essentiellement à effectuer :
- un relevé tridimensionnel de la surface de la pièce (14), à partir duquel on calcule la position réelle de la pièce en face du dispositif d'éclairage (26) et de prise de vues (24),
- le calcul d'une trajectoire de ce dispositif pour l'acquisition optique bidimensionnelle de la surface de la pièce,
- l'acquisition d'images globales de la pièce en utilisant les paramètres de la base de données relatifs à la matière, la rugosité et la forme de la surface,
- une analyse des images et la détermination dans ces images de zones permettant une optimisation des réglages optiques liés à l'exposition en fonction des paramètres figurant dans la base de données sur l'orientation du capteur de prise de vues, l'éclairage et la forme de la surface,
- le calcul d'une trajectoire d'acquisition d'images permettant d'optimiser les réglages optiques en tenant compte de l'analyse ci-dessus et d'une trajectoire du dispositif d'éclairage,
- l'optimisation des réglages optiques d'acquisition d'images des zones définies précédemment,
- l'analyse des images, la validation des réglages optimisés pour les différentes zones et leur enregistrement dans la base de données,
- la discrétisation de la surface de la pièce en zones d'acquisition tenant compte des réglages optimisés,
- puis, en combinaison avec le résultat d'une étape de segmentation, simplification et reconstruction, le calcul d'une trajectoire d'acquisition d'images au réel,
- la prise d'images de la surface de la pièce avec les réglages optimisés,
- l'analyse des images et la recherche de défauts et d'artéfacts optiques,
- la caractérisation des défauts et artéfacts trouvés et leur comparaison à des défauts et artéfacts connus enregistrés dans une base de données,
- puis, si les défauts et artéfacts trouvés sont déjà connus, leur enregistrement en base de données de référence et l'édition d'un rapport correspondant,
- ou, si les défauts et artéfacts trouvés ne figurent pas dans la base de données, leur corrélation par des procédés de contrôle non destructif (par exemple courants de Foucault ou photothermie), leur identification comme nouveau défaut ou nouvel artéfact optique et leur enregistrement en base de données de référence.

## Patentansprüche

1. Automatisiertes Verfahren für die zerstörungsfreie Prüfung eines mechanischen Teils (14) mittels einer Vorrichtung (10), welche einen Bildsensor (24), eine Beleuchtungs-Lichtquelle (26) und Mittel (18, 22) zum relativen Verschieben des Bildsensors, der Lichtquelle und des mechanischen Teils umfasst, wobei dieses Verfahren im Wesentlichen darin besteht, eine dreidimensionale Vermessung der Oberfläche des Teils durchzuführen, die Oberfläche des Teils in Bereiche aufzuteilen, die vom Bildsensor fotografiert werden können, eine Bahn des Bildsensors und der Lichtquelle relativ zum Teil zu bestimmen und Bilder der besagten Oberflächenbereiche des Teils zu erfassen, **dadurch gekennzeichnet, dass** es ferner darin besteht:
- diese Bilder zu analysieren und in diesen Bildern überbelichtete oder unterbelichtete Bereiche zu bestimmen;
- die optischen Bilderfassungsparameter dieser Bereiche zu optimieren und die Oberfläche des Teils unter Berücksichtigung der Optimierung besagter optischer Parameter für diese Bereiche ein zweites Mal zu unterteilen;
- eine neue Bahn für Bildsensor und Lichtquelle zu definieren, welche die Erfassung von Bildern der Oberfläche des Teils unter Benutzung der zweiten Aufteilung und der optimierten optischen Parameter ermöglicht;
- die Bilder dieser Bereiche der neuen Bahn folgend zu erfassen und diese Bilder zu speichern, und
- auf den gespeicherten Bildern automatisch eventuelle Fehler an der Oberfläche des Teils zu ermitteln und sie mit bekannten Fehlern, die in einer Datenbank gespeichert sind, zu vergleichen.

2. Verfahren nach Anspruch 1, **dadurch gekennzeichnet, dass** es darin besteht, vorab eine Datenbank zusammenzustellen, in welcher Bezugsbilder von Oberflächen mechanischer Teile, welche charakteristische Fehler aufweisen, gespeichert sind, wobei jedes Bild gemeinsam mit den Daten der Oberflächenmerkmale, wie zum Beispiel der Beschaffenheit des Materials und dessen Rauhigkeit, und Informationen über die Beleuchtungs- und Aufnahmebedingungen, und einem Indikator für den Erkennungsgrad eines Fehlers an der Oberfläche des Teils gespeichert wird, wobei das Verfahren anschließend darin besteht, die Änderungen der optischen Parameter und Erfassungsbahnen und die Ergebnisse der an den Teilen durchgeführten Prüfungen in dieser Datenbank zu speichern.

3. Verfahren nach Anspruch 1 oder 2, **dadurch gekennzeichnet, dass** die dreidimensionale Vermessung der Oberfläche des Teils (14) bei einem bestimmten mechanischen Teiletyp ein einziges Mal durchgeführt wird, wenn sich die kontrollierten Teile in Form und Aussehen nur geringfügig oder praktisch gar nicht unterscheiden.

4. Verfahren nach Anspruch 1 oder 2, **dadurch gekennzeichnet, dass** das zu prüfende Teil (14) einer dreidimensionalen Vermessung der Oberfläche unterzogen wird, wenn es in Form und Aussehen nicht unwesentlich von den anderen geprüften Teilen abweicht.

5. Verfahren nach einem der Ansprüche 1 bis 4, **dadurch gekennzeichnet**, das es ferner darin besteht, dass nach der dreidimensionalen Vermessung des Teils (14) ein digitales Modell dieser Oberfläche in Form mathematischer Kurven, wie zum Beispiel Bézierkurven und NURBS-Funktionen, generiert wird, und Bildsensor (24) und Lichtquelle (26) unter Heranziehen der dreidimensionalen Vermessung relativ zum Teil neu eingestellt werden.

6. Verfahren nach einem der vorhergehenden Ansprüche, **dadurch gekennzeichnet, dass** die Optimierung der optischen Bilderfassungsparameter darin besteht, die Stärke und den Einfallswinkel der von der Lichtquelle (26) erzeugten Beleuchtung zu verändern und einen optimalen Wert für die Stärke und den Einfallswinkel der Beleuchtung durch Vergleich der Bilder untereinander unter Bezugnahme auf die Datenbank durch Herstellen eines Zusammenhangs zwischen dem Erkennungsgrad der Oberflächenfehler und der Lichtstärke und dem Einfallswinkel der Beleuchtung zum einen, und den Oberflächenmerkmalen zum andern, zu bestimmen.

7. Verfahren nach einem der vorhergehenden Ansprüche, **dadurch gekennzeichnet, dass** die Optimierung darüber hinaus darin besteht, zu prüfen, ob die Oberfläche jedes, aus der zweiten Aufteilung resultierenden Bereichs kleiner ist als das vom Bildsensor abgedeckte Feld und die Standardabweichung von den Normalwerten an jedem Punkt dieser Bereiche kleiner als ein vorab festgelegter Mindestwert ist.

8. Verfahren nach einem der vorhergehenden Ansprüche, **dadurch gekennzeichnet, dass** es darin besteht, den Bildsensor (24) und die Lichtquelle (26) relativ zum mechanischen Teil (14) mit Roboterarmen (18, 22), die jeweils einen Bildsensor und die Lichtquelle tragen, zu verschieben.

9. Verfahren nach einem der vorhergehenden Ansprüche, **dadurch gekennzeichnet, dass** der Bildsensor (24) eine Kamera mit Photodetektoranordnung vom Typ CCD oder CMOS ist.

10. Verfahren nach Anspruch 1, **dadurch gekennzeichnet, dass** es im Wesentlichen darin besteht:
- eine dreidimensionale Vermessung der Oberfläche des Teils (14) durchzuführen, auf deren Grundlage man die tatsächliche Position des Teils gegenüber der Beleuchtungsvorrichtung (26) und der Aufnahmevorrichtung (24) berechnet;
- eine Bahn dieser Vorrichtung zur optischen zweidimensionalen Erfassung der Oberfläche des Teils zu berechnen,
- die globale Bilderfassung des Teils mithilfe der Parameter der Datenbank zu Material, Rauheit und Form der Oberfläche vorzunehmen,
- die Bilder zu analysieren und in diesen Bildern Bereiche zu bestimmen, die eine Optimierung der optischen Einstellungen im Zusammenhang mit der Belichtung unter Berücksichtigung der in der Datenbank enthaltenen Parameter zur Ausrichtung des Aufnahmesensors, zur Beleuchtung und zur Form der Oberfläche ermöglichen,
- eine Bilderfassungsbahn zu berechnen, die die Optimierung der optischen Einstellungen unter Berücksichtigung der oben genannten Analyse und einer Bahn der Beleuchtungsvorrichtung ermöglicht,
- die optischen Bilderfassungseinstellungen der zuvor definierten Bereiche zu optimieren,
- die Bilder zu analysieren, die optimierten Einstellungen für die verschiedenen Bereiche zu bestätigen und diese in der Datenbank zu speichern,
- die Oberfläche des Teils unter Berücksichtigung der optimierten Einstellungen in Erfassungsbereiche zu diskretisieren,
- dann in Kombination mit dem Ergebnis einer Phase der Segmentierung, Vereinfachung und Rekonstruktion eine reelle Bilderfassungsbahn zu berechnen,
- mit den optimierten Einstellungen Aufnahmen von der Oberfläche des Teils zu machen,
- die Bilder zu analysieren und Fehler und optische Artefakte zu suchen,
- die gefundenen Fehler und Artefakte zu charakterisieren und mit den in einer Datenbank gespeicherten bekannten Fehlern und Artefakten zu vergleichen,
- dann, falls die gefundenen Fehler und Artefakte bereits bekannt sind, diese in einer Bezugsdatenbank zu speichern und einen entsprechenden Bericht zu editieren,
- oder, falls die gefundenen Fehler und Artefakte nicht in der Datenbank enthalten sind, diese durch zerstörungsfreie Prüfverfahren (zum Beispiel Foucaultsche Ströme oder Photothermie) zueinander in Beziehung zu setzen, sie als neue Fehler oder neue optische Artefakte zu identifizieren und in der Bezugsdatenbank zu speichern.

## Claims

1. An automatic method of non-destructively inspecting a mechanical part (14) by means of a device (10) comprising an image sensor (24), a lighting source (26), and means (18, 22) for moving the image sensor, the lighting source, and the mechanical part relative to one another, the method consisting essentially in making a three-dimensional survey of the surface of the part, defining a subdivision of the surface of the part into zones suitable for being photographed by the image sensor, defining respective paths for the image sensor and for the lighting source relative to the part, and acquiring images of said zones of the surface of the part, the method being **characterized in that** it also consists in:
• analyzing the images and determining zones in the images that are over-exposed or under-exposed;
• optimizing optical parameters for image acquisition of said zones and defining a second subdivision of the surface of the part, taking account of the optimization of said optical parameters for said zones;
• defining a new path for the image sensor and a new path for the lighting source that enable images to be acquired of the surface of the part while using the optimized optical parameters and the second subdivision;
• acquiring images of said zones while following the new paths and recording the images; and
• automatically determining any surface defects of the part in the recorded images and comparing them with known defects recorded in a database.

2. A method according to claim 1, **characterized in that** it consists in previously building up a database in which reference images are recorded of mechanical part surfaces that present typical defects, each image being recorded together with data about surface characteristics, such as the nature of the material and its roughness, with information relating to lighting and picture-taking conditions, and with an indicator of the quality with which a defect is detected in the surface of the part, the method subsequently consisting in recording in said database modifications to the optical parameters and the acquisition paths and the results of inspections performed on the various parts.

3. A method according to claim 1 or claim 2, **characterized in that** the three-dimensional survey of the surface of the part (14) is performed once only for any given type of mechanical part, providing the differences in shape and appearance between the parts being inspected are small or substantially zero.

4. A method according to claim 1 or claim 2, **characterized in that** the part (14) for inspection is subjected to a three-dimensional survey of its surface whenever it presents non-negligible differences of shape and appearance compared with other inspected parts.

5. A method according to any one of claims 1 to 4, **characterized in that** it also consists, after taking a three-dimensional survey of the surface of the part (14), in generating a digital model of said surface in the form of mathematical curves such as Bezier curves and NURBS functions, and in repositioning the image sensor (24) and the lighting source (26) relative to the parts by using the three-dimensional survey.

6. A method according to any preceding claim, **characterized in that** the optical parameters for acquiring images are optimized by varying the intensity and the angle of incidence of the lighting produced by the lighting source (26), and in determining the optimum value for the intensity and the angle of incidence of the lighting by comparing images with one another with reference to the database while establishing a relationship between the level of surface defect detection and both the surface characteristics and also the intensity and the angle of incidence of the lighting.

7. A method according to any preceding claim, **characterized in that** the optimization also consists in verifying that the surface area of each zone resulting from the secondary subdivision is smaller than the field covered by the image sensor, and that the standard deviation of the normals at all points of said zones is less than a predetermined minimum value.

8. A method according to any preceding claim, **characterized in that** it consists in moving the image sensor (24) and the lighting source (26) relative to the mechanical part (14) by means of robot arms (18, 22) respectively carrying the image sensor and the lighting source.

9. A method according to any preceding claim, **characterized in that** the image sensor (24) is a camera having a matrix of photodetectors of the CCD or CMOS type.

10. A method according to claim 1, **characterized in that** it consists essentially in:
• making a three-dimensional survey of the surface of the part (14), on the basis of which the real position of the part is calculated relative to the lighting device (26) and the picture-taking device (24);
• calculating a path for the device for optically acquiring two-dimensional images of the surface of the part;
• acquiring overall images of the part by using parameters from the database relating to the material, the roughness, and the surface shape of the part;
• analyzing the images and determining zones in the images that serve to optimize optical settings associated with the exposure as a function of parameters that appear in the database about the orientation of the picture-taking sensor, the lighting, and the surface shape;
• calculating a path for acquiring images, which path serves to optimize the optical settings, while taking account of the above analysis and of a path for the lighting device;
• optimizing optical settings for acquiring images of the above-defined zones;
• analyzing images, validating optimized settings for the various zones and storing them in the database;
• subdividing the surface of the part into discrete acquisition zones that take account of the optimized settings;
• thereafter, in combination with the result of a step of segmenting, simplifying, and reconstructing, calculating a real-time image-acquisition path;
• taking images of the surface of the part with the optimized settings;
• analyzing the images and searching for defects and optical artifacts;
• characterizing the defects and artifacts that are found and comparing them with known defects and artifacts stored in a database;
• thereafter, if the defects and artifacts that have been found are already known, recording them in the reference database and issuing a corresponding report;
• or else, if the defects and artifacts that are found do not appear in the database, correlating them by applying non-destructive inspection methods (e.g. using eddy currents or thermal imaging) identifying them as being new defects or new artifacts, and recording them in the reference database.
